# EUROPEAN PATENT APPLICATION

(11) **EP 2 437 015 A1**
(43) Date of publication of application: **04.04.2012**
(21) Application number: 10780861.0
(22) Date of filing: 14.05.2010
(51) Int. Cl.: F26B 5/04, F26B 9/06

(54) **METHOD AND DEVICE FOR DRYING MATERIALS**

(30) Priority: 25.05.2009 RU 2009119415
(71) Applicant: Zakpytoe Akcionernoe Obschestvo "Twin Trading Company", Moscow 119330 (RU)
(72) Inventor: ABRAMOV, Yakov Kuzmich, Moscow 109202 (RU); VESELOV, Vladimir Mihailovich, Moscow 123181 (RU); ZALEVSKY, Viktor Mihailovich, Moscow 125080 (RU); EVDOKIMOV, Vladimir Dmitrievich, Moscow 127083 (RU); ERMAKOVA, Larisa Sergeevna, Moscow 119607 (RU); TAMURKA, Vitaly Grigorevich, Moscow 109386 (RU); VOLODIN, VeniaminSergeevich, Moskovskaja obl. 142700 (RU); KHAPAEVA, Svetlana Nikolaevna, Moscow 117485 (RU)
(74) Representative: Klemm, Rolf
(86) International application number: PCT/RU2010/000242
(87) International publication number: WO 2010/138021

(57) **Abstract**

The invention covers the techniques for drying material of vegetable, animal origin fish and sea food with the use of vacuum and can be used for getting essential oils and biologically valuable components used in food, pharmaceutical and perfumery industries.

The proposed method for drying includes several thermo-vacuum-impulsive cycles: heating up of material to the temperature not leading to denaturation of its original quality characteristics, a quick impulsive vacuum treatment, exposure of material after a vacuum treatment, a vacuum relief to atmospheric pressure. Heating up of material in a drying chamber and a vacuum relief is performed with dried air or gas heat medium with the temperature up to 300°C.

The apparatus to perform the method of drying materials comprises two drying chambers with pressure-proof doors connected by means of pipelines with quick-response valves to a receiver, heat exchanger-condensers, condensate tanks, a vacuum pump, a device for heat medium heating up and delivering installed in a separate chamber with heat insulation and connected by means of heat insulated forcing air ducts with quick response valves to inlet of each drying chamber. Inside each chamber a container with the tube along the axis of rotation with rotating capacity is installed. At that either the end surface of the container is perforated to supply with heat medium or opposite walls of the container are netted.

The invention allows decreasing drying time and increasing the quality of the drying materials as well as getting essential oils and biologically valuable components from materials being dried.

## Description

### Technical field

The invention covers the techniques for drying material of vegetable and animal origin with the use of vacuum, in particular, drying food products (vegetables, fruits, drug plants, meat, fish, sea food etc.).

### Technical level

Currently used method of drying food products (See patent RF Nº2018245, M. class. 5A 23 L 3/52) including treatment of raw materials with liquid carbon dioxide at pressure above atmospheric, foaming and bloating of raw material at pressure relief to atmospheric and moisture evacuation by means of temperature increase and/or pressure lowering. At that treatment of raw material with liquid carbon dioxide is performed in the field of mechanical ultrasonic oscillations with the frequency of 18-120 kHz and moisture evacuation is performed in the field of high frequency electromagnetic oscillations with the frequency not less than 850 kHz.

The disadvantages of the known method for drying include high maintenance due to liquid carbon dioxide waste, also the use of high-frequency oscillations requires creation of supplementary protection for operating personnel because the oscillations are hazardous for human health.

There is also an improved method of drying high humidity materials of vegetable and animal origin (See patent RF Nº2048245, M. class.F26D3/30) performed by means of formation its layer and subsequent radiation with IR-rays to the required humidity at that drying is performed in impulsive mode "heating - cooling". Radiation with IR rays is performed within the range of 2 - 10 micron with flux density of 4.5 - 8.5 kW/m² to reach temperature equal to 0.8-0.9 of its drying temperature limit and cooling is performed to reach temperature of material equal to its 0.4 - 0.6 of its drying temperature limit.

The disadvantages of this drying method include high energy costs, long duration of drying process which negatively affects the quality of the material and increases drying time.

There exists also a radiant drier for vegetable food products including a drying chamber, trays for product with each of them located one above the other in the chamber, devices for input-output of a drying agent, pressure shields, swirlers for drying agent, IR-emitters in the middle spectrum region. The treated food product is heated with direct, reflected IR-rays and convectional ascending air. Heating mode is specified by the type of a treated product. Outer air enters through the bottom of a drying chamber through side slots and the bottom opening. Generally air heating is performed with emitters, partly air duct-deflectors and air ducts. While the product is being heated its moisture evaporates, diffuses into the air flow and is evacuated through an open chamber cover along with the air flow. On completing drying process the drier is switched off, the top cover is open; trays with dried product and the bottom tray with fine fraction are removed from the drying chamber. (See patent RF Nº2034489 M.class A 23 B 7/02, F 26 B 3/30).

The disadvantages of radiant drier include length of drying process, lack of guarantee of partial or local burning of product, high specific energy consumption due to full conversion of product moisture into vapour, and lack of catching of air-vapour mixture.

Also is being used an apparatus for vegetable material drying (See. patent RF Nº2302740, M class F26 B3/00), comprising two drying chambers with pressure-proof doors, a receiver, a heat exchanger and condensers, an air-lock chamber, a vacuum and air pumps, besides, there is a ventilator and a heater in each drying chamber. Each drying chamber is connected by means of pipelines to one of the heat exchanger-condensers and to a receiver to which a vacuum pump is connected, to pipelines connecting drying chambers and a receiver, by means of valves air pump outputs are connected to, inputs of heat exchanger-condensers are connected to receiver additionally and outputs of heat exchanger-condensers are connected to air-lock chamber by means of valves and pipelines.

The disadvantages of the apparatus for vegetable material drying include insufficient effectiveness of drying process because a moisture evacuation process is performed with only partly dehumidified heating agent.

The most similar in technical nature to the proposed method (the closest analogue) is the method for drying of vegetable materials (See patent RF Nº2238490, M. classF26B5/04), including repeated at least twice the sequence of operations in enclosed space of drying chamber - heating up of vegetable material to the temperature not leading to denaturation its origin quality characteristics, a quick vacuum treatment with exposure after the vacuum treatment by means of a receiver, quick-response valves and pipelines with continuous heating of vegetable materials during all the drying process in a drying chamber isolated from the atmosphere, at that during the heating process and exposure of material at residual vacuum the heating process is performed to temperature not leading to material denaturation to reach pressure in the closed space of the drying chamber equal to vapour-pressure equilibrium at present temperature.

The apparatus to put into practice the closest analogue-method is the apparatus for drying vegetable material (See. patent RF Nº2232955, M class. F 26 B 5/04). The apparatus selected as the closest analogue comprises two drying chambers with pressure-proof doors, devices for input-output of a drying agent, air ducts, a receiver, connected by means of pipelines with mounted quick-response valves to receiver which in volume is equal to free space of drying chamber after being filled with the product. It is equipped with heat exchanger-condenser, device for heating medium heating up, a cooling machine to cool the heat exchanger, a vacuum pump and an air-lock chamber to collect liquids from the receiver, drying chambers and a heat exchanger. The heat exchanger, a cooling machine, a vacuum pump and an air-lock chamber are interconnected and connected to a receiver and to drying chambers by means of pipelines with the attached valves.

However in this method and in the apparatus to put it in practice the heating up of the material is performed in a sealed chamber under vacuum with partly saturated vapour, evacuated from material being dried which results in low intensity moisture evacuation because the process goes on at water vapour pressure close to vapour-pressure equilibrium. This leads to the increase of the drying time and a lower quality of dried material.

### Disclosure of the invention

The aim of the invention is to develop a method and the apparatus which uses it without disadvantages of the closest analogues caused by heating of materials being dried to temperatures exceeding water vapour saturation temperature and required to intensify the humidity evacuation process which leads to drying process stimulation and product quality improvement.

To solve the problems the method, comprising repeating at least twice the sequence of operations in the enclosed space of a drying chamber - heating of vegetable material to the temperature not leading to denaturation of its original quality characteristics, a quick vacuum treatment by means of a receiver, quick response valves and pipelines, exposure of material after a vacuum treatment, at the end of operating cycle a vacuum relief to atmospheric pressure is performed, at that material heating in drying chamber and vacuum relief is performed with dried air or gas heat transferring medium with the temperature to 300°C.

Reactionless gas can be used as heat medium to avoid oxidation reactions in material being dried in discharge line for waste air or gas heat transferring medium. In discharge line for waste air or gas heat transferring medium it is possible to get essential oils and biologically valuable components at temperatures lower dew point temperature for future use.

To use the method with the apparatus for drying of materials of vegetable and animal origin, fish and sea food which has two drying chambers with the sealed doors connected by means of pipelines with quick-response valves to the , heat exchanger-condensers, an air-lock chamber (condensate tank), a vacuum pump, a device for heat medium heating up. According to the invention, the device for heat medium heating up is installed in a separate chamber with heat insulation and connected by means of heat insulated forcing air ducts with quick response valves to an inlet of each drying chamber, inside which a container with tube along the axis of rotation is installed with the rotating capacity at that either tube surface or end surface of a container are perforated to supply the heat medium and opposite walls of the container are netted.

When heating up the material by air or gas heat medium with temperature up to T=300°C decreases heating up time, at vacuum-impulsive mode excludes the material overheating because quick high-temperature heating of the material is performed at the temperature not leading to material denaturation and at impulsive vacuum treatment and vacuum exposure of heated material due to intensive moisture evaporation its cooling occurs accompanied by temperature differential more than 50°C, and this saves qualitative characteristics of materials being dried.

Vacuum relief at atmospheric pressure is performed with dry heat medium which reduces time for drying the material.

A complex of the above mentioned features of the method as well as a complex of the apparatus features allows developing techniques and the equipment for drying materials which significantly reduces drying time and increases the quality of dried materials and allows getting essential oils and biologically valuable components.

### Using the invention

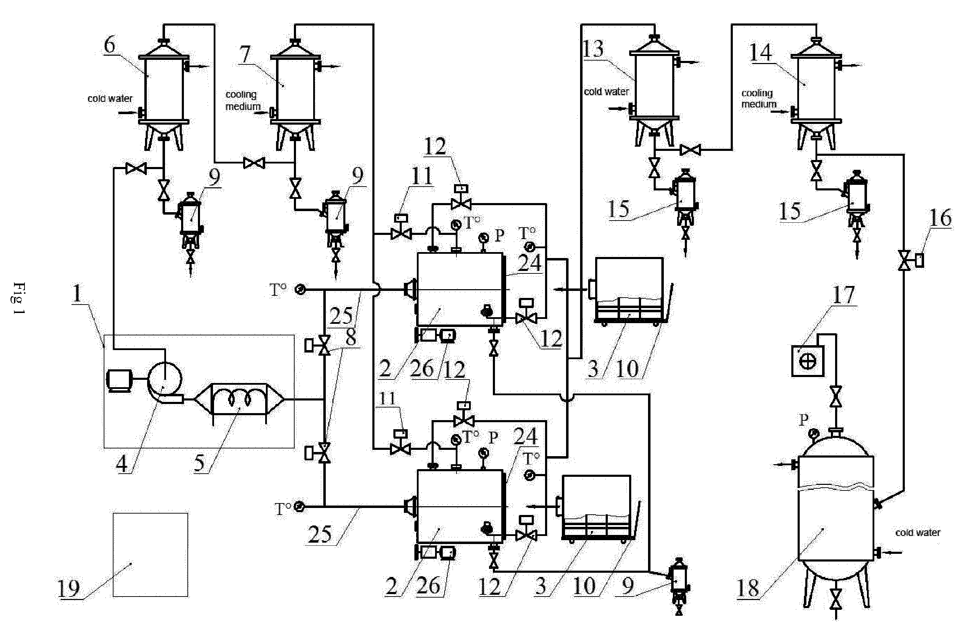

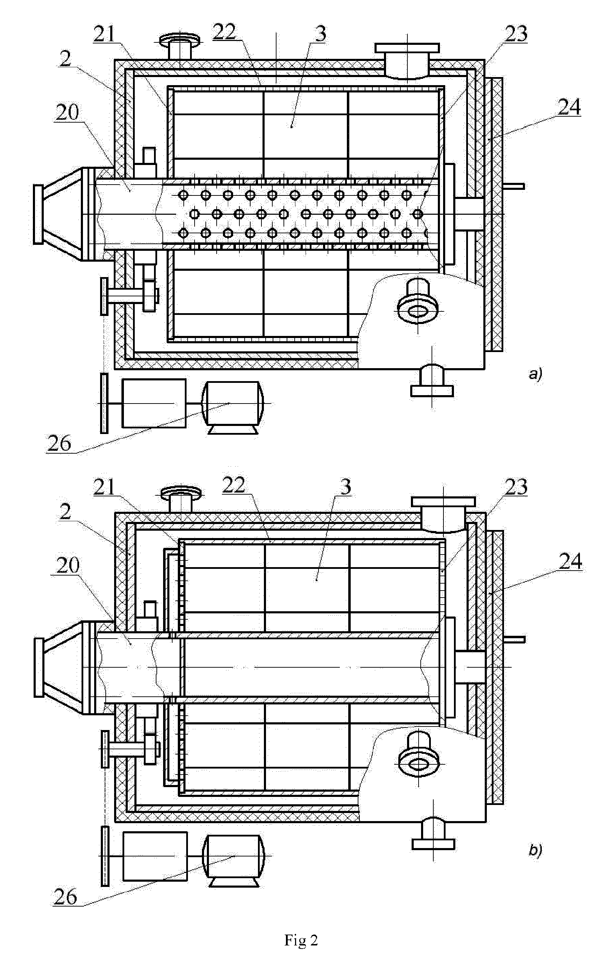

The Figure shows the apparatus for drying of materials of vegetable, animal origin, fish and sea food to realize the claimed method (Fig. 1) and alternative designs of containers of a drying chamber (Fig. 2a, Fig.2b).

The drying device (Fig. 1) comprises two drying chambers 2 with sealed doors 24, rotating containers 3 of different designs (see Fig. 2a and Fig.2 b ), a device for heat medium heating up 1 (and heat medium supplying) comprising a heater 5 and a ventilator 4, condensers 6, 7 for waste heat medium drying, condensate tanks 9, air ducts 25 with mounted quick-response valves 8, 11, connecting drying chambers to the device for heat medium heating up and pipelines with quick-response valves 12, 16 mounted in line of vacuum preparation (with a receiver 18 and a vacuum pump 17 creating required vacuum in the receiver), condensers 13, 14 and condensate tanks 15 to collect various types of biologically valuable components being removed from drying chambers. Drying chambers, device for heat medium heating up and forcing air ducts of drying chambers are coated with heat insulation and have a protective housing. Control panel 19 provides for the process control at drying apparatus.

Drying chambers 2 (see Fig. 2) includes a chamber's body with heat insulation and a rotating container 3 with tube 20 along axis of rotation. Container's working section is divided in three parts with partitions and longitudinal bands inside the container provides for better material mixing. Two variants of container designs are proposed to provide heat medium moving:
- a perforated tube 20 for delivering heat medium and netted lateral surface 22 of the container's body for heat medium removing (Fig. 2a)
- perforated end surface 21 of the container's body 3 for delivering heat medium and netted end surface 23 for heat medium removing (inlet to the central tube is blocked). Such design facilitates blowing of material with heat medium and mixing of different layers of material thus facilitating better removing of heat medium waste .

The claimed method for materials drying is explained by the example of one of the two drying chambers as follows:
Upon reaching residual pressure 0.1-1.3 kPa in the receiver 18 and in a feeding vacuum line to the drying chamber 2, the vacuum pump 17 shuts off, a quick-response valve 16 is closed and a drying chamber is isolated from the receiver by means of a valve 12.

The material prepared for drying process is evenly delivered into containers 3 and placed into a drying chamber 2 by means of a transport trolley, is fixed in the drying chamber, the door of the drying chamber is closed pressure tight and a rotary drive 26 of the container 3 is switched on. Air or gas heat medium heated to temperature of 300°C is delivered into the rotating container by means of valve 8 and air ducts 25, where overturning and mixing material is blown evenly with heat medium with high heat-transfer factor and intensity of moisture evacuation and being heated to a certain temperature do not lead to material denaturation.

While material is heated up with high temperature heat medium, a quick-response valve is open and waste heat medium from the drying chamber enters condensers 6, 7, is dehumidified and is delivered by means of a ventilator 4 into a heater 5 again and the formed condensate enters tanks 9. Application of condensers in line of heat medium recirculation excludes discharge of heated medium into atmosphere. The temperature of dehumidified heat medium delivered into device for heat medium heating up is 40÷85°C. Heat medium with less relative humidity absorbs more intensive vapour of humidity from the material being dried in the drying chamber. With no condenser the heat medium is saturated quickly with water vapour and drying process is lowered.

Upon reaching maximum required temperature not leading to material denaturation delivering and removing of air or gas heat medium into the drying chamber stop and valves 8, 11 are closed.

Following high temperature convective drying operation by means of quick-response valves 12 the impulsive pressure relief is performed in the drying chamber by connecting it to a vacuum line. In the drying chamber a process of impulsive vacuum drying of material proceeds to 15 sec depending upon the internal cross section of supply pipelines and the receiver's volume, then material is exposed to vacuum treatment during up to 10 min. Impulsive vacuum treatment and vacuum exposure operation is performed without additional heating up, and thermal insulation of the drying chamber prevents the decrease of material temperature in the drying chamber.

During vacuum exposure of the material and following impulsive pressure relief, the valve 12 is open and air or gas heat medium from the drying chamber by means of a vacuum line enters consequently condensers 13, 14 where moisture and biologically valuable components are extracted. Application of different cooling agents in condensers 13, 14 allows separating the removed valuable components of the material being dried according to their condensation temperatures. Vacuum relief in the drying chamber is performed by means of dehumidified heated air or gas heat medium while valves 8, 11 are open.

Location of the device for heat medium heating up outside the drying chamber allows heating up material at atmospheric pressure rather than in vacuum which accelerates the whole drying process.

Drying process control is performed according to the input drying chamber heat medium temperature (Tf.t.) and the output drying chamber waste heat medium temperature (Tw.m.), and the temperature of vapour-air mixture (Tv.a.m.) in a vacuum line at the exit from the drying chamber.

Thermo-vacuum drying operation cycle is repeated several times until the required final humidity in material being dried is reached.

Upon completion of drying process the drying chambers are depressurized, the container 3 with dried material is rolled out and placed on the trolley 10. The next container filled with a new batch of the material to be dried is rolled into the drying chamber.

The second drying chamber functions in a similar manner with time displacement for process operations i.e. while heating up of material is performed in the first drying chamber, the process of vacuum-impulsive drying is performed in another drying chamber.

The proposed design concept for the location of the device for heat medium heating up outside the drying chamber allows using one device for heat medium heating up for the operation of two drying chambers and organizing highly effective drying process, simplifying and making cheaper drying chamber design and lowering power consumption.

### Examples of practical realization of drying process with apparatus for drying of materials of vegetable, animal origin and fish

### 1. Drying of carrot

The carrot of original humidity W=80% is to undergone drying. Before start-up the preheating of a drying chamber and the whole apparatus is performed with air or gas heat medium.

A vacuum pump creates working pressure of Pw.=0.1÷1.3 kPa in receiver and pipelines connected to drying chamber.

A total of 300 kg of prepared (washed, cleaned, cut and blanched) carrot is loaded into a drying chamber container placed on a transport trolley. The carrot layer is even along the length, width and height of the container. After the carrot is loaded the container is transported by means of guides into the drying chamber body and is adjusted to the unit for container's rotation and air duct. The door the drying chamber is closed, the device for heating up of air and gas heat medium is started up and the product is heated up with air heat medium while it is continuously being mixed. To intensify the drying process and accelerate heating up the temperature of delivered heat medium is pre-set at Tf.m. =300 °C. While blowing high temperature heat medium through a layer of carrot the heating up process proceeds ≈ 10 min up to Tw.m.=95 °C. The time for carrot heating up depends upon TH.T., filling degree of the container with the prepared carrot, its original and final humidity, its temperature after vacuum-impulsive drying operation and temperature of recirculated air or gas heat medium. The time for drying carrot up to the humidity of 8% totalled 1-1.2 hours at that temperature of waste heat medium (Tw.m.) passed through the layer of carrot and temperature of air-vapour mixture (Tv.a.m.) in vacuum line were controlled. This temperature is close to temperature of carrot heating up during drying process.

The first impulsive-vacuum treatment process for carrot is done during τ ≅8c at temperature TO.T =95°C.

During the first cycle of vacuum treatment and exposure of carrot under vacuum maximum permissible temperature (Tm.p.) decreases from 58°C to 15°C.

During the following cycles for carrot heating up the temperature was Tw.m. = 105, 115°C and temperature in vacuum line was Tv.a.m. ≈ 52°C, including temperature drop to 15÷20 °C due to humidity vaporization during vacuum drying operation. While humidity is being removed during the last vacuum treatment cycles difference of temperature (Tv.a.m.₁- Tv.a.m.₂₋₅) serves as the objective criterion of carrot dryness. During vacuum-impulsive drying process from cycle to cycle (up to 5 cycles) the loss of humidity in carrot increases the carrot temperature and thus lowering the difference of temperatures (Tv.a.m.₁- Tv.a.m.₂₋₅) consequently. By the end of drying process the temperature has minimal deviation and after 5 cycles has deviation of 4-5 °C which meets GOST 7588-71 requirements on humidity content. Dried carrot kept its original colour, taste and odour.

Following the drying process the dried carrot is delivered to a packaging unit.

### 2. Drying of meat

Before start-up the drying chamber and the whole apparatus is preheated with air or gas heat medium.
A vacuum pump creates working pressure Pw.=0.1÷1.3 kPa in receiver and pipelines connected to drying chamber.

Prior to the drying process the meat is stewed during 30 min with added spices (black pepper, laurel leaf etc.) then is cut into pieces ≈ 40÷50 mm. 200 kg of prepared meat is put into the drying chamber's container fixed on a transport trolley. The meat layer is even along the length, width and height of the container. After the meat is loaded into the container it is transported by means of guides into the drying chamber's body and fixed to the unit for rotation of the container and an air duct. The door of the drying chamber is closed, the device for heating up of air and gas heat medium is started up and the product is heated up to Tf.m.=300°C with air heat medium while being continuously mixed. While blowing high temperature heat medium through a layer of meat the heating up process proceeds ≈ 12 min at Tw.m.= 98 °C. Time for drying process for meat humidity W=35÷40 to meat humidity of 8÷10% totalled 30÷40 min. The first impulsive-vacuum treatment process for meat is done during τ ≅12÷15s at the temperature Tw.m.= 98°C.

During the first cycle of vacuum treatment and exposing meat to vacuum the maximum permissible temperature (Tm.p.) decreases from 58°C to 18°C.

During the following cycles for meat heating up Tw.m.= 115, 120°C, and temperature in vacuum line was Tv.a.m. ≈ 50-22°C including temperature drop to 18°C due to humidity vaporization during vacuum drying.

A total of 5-6 vacuum-impulsive cycles are performed to reach meat humidity content of W=8÷10 %. Dried meat as dry product, can be stored for a long time and retains its taste when cooked.

### 3. Drying of fish

Drying of fish (salmon) process was performed in the proposed apparatus. Prior to drying process the fish was kept in a pickle solution (salt, spices), cut into plates with thickness of 1.5-2 cm and then put into the container of the drying chamber in amounts of 200 kg.
The door of drying chamber is closed, the device for heating up of air and gas heat medium is started up and the product is heated up to Tf.m.= 300°C with air heat medium at continuous mixing. While blowing high temperature heat medium through a layer of fish the heating up process proceeds ≈ 15 min to Tw.m.= 92 °C. The time for drying process for fish humidity of W=60 to fish humidity of 9÷10% totalled 40÷60 min. The first impulsive-vacuum treatment process for fish proceeded during τ ≅12÷15s at the temperature Tw.m.= 92°C.
During the first cycle of vacuum treatment and fish exposure to vacuum, maximum allowable temperature (T 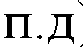 ) decreases from 59°C to 29°C. During the following cycles for fish heating up Tw.m.= 100,115,120°C, and temperature in the vacuum line was Tv.a.m. ≈ 55-18°C including temperature drop to 17°C due to humidity vaporization during vacuum drying.

A total of 7-8 vacuum-impulsive cycles should be performed to reach fish humidity content of W=9÷10%.

Dried fish can be stored for a long time and is ready-to-eat.

## Claims

1. Method for drying materials of vegetable, animal origin, fish and sea food, comprising repeating at least twice the sequence of performing of operations in the enclosed space of a drying chamber - heating of material to the temperature not leading to denaturation of its original quality characteristics, quick vacuum treatment by means of a receiver, quick response valves and pipelines, exposure of material after the vacuum treatment, wherein at the end of an operating cycle a vacuum relief to atmospheric pressure is performed, at that material heating in drying chamber and vacuum relief is performed with dried air or gas heating medium with the temperature up to 300°C.

2. Method for drying materials of claim 1, wherein reactionless gas excluding oxidation reactions in material being dried is used as gas heat medium.

3. Method for drying materials of claim 1, wherein in discharge line for waste air or gas heat medium and in vacuum line it is possible to get essential oils and biologically valuable components at temperatures lower than dew point temperature.

4. The apparatus for drying materials of vegetable, animal origin, fish and sea food comprising two drying chambers with pressure-proof (sealed) doors connected by means of pipelines with quick-response valves to the receiver, heat exchanger-condensers, a condensate tank, a vacuum pump, the device for heat medium heating up, wherein, the device for heat medium heating up is installed in a separate chamber with heat insulation and connected by means of heat insulated forcing air ducts with quick response valves to inlet of each drying chamber, inside which a container with tube along the axis of rotation is installed with rotating capacity at that either tube surface is perforated to supply with heat medium and lateral surface of the container body is netted to remove heat medium or the end surface of the container body is perforated to supply with heating medium and opposite walls of container are netted to remove heat medium.
